# EUROPÄISCHE PATENTSCHRIFT

(11) **EP 1 888 325 B1**
(45) Veröffentlichungstag und Bekanntmachung des Hinweises auf die Patenterteilung: **09.04.2014**
(21) Anmeldenummer: 06706729.8
(22) Anmeldetag: 08.02.2006
(51) Int. Cl.: B29D 30/16, B29D 30/30, B29D 30/70

(54) **VERFAHREN ZUR HERSTELLUNG EINES FAHRZEUGLUFTREIFENS**
METHOD FOR PRODUCING A PNEUMATIC TYRE FOR A VEHICLE
PROCEDE DE PRODUCTION D'UN PNEU DE VEHICULE

(30) Priorität: 23.04.2005 DE 102005018964
(43) Veröffentlichungstag der Anmeldung: 20.02.2008
(73) Patentinhaber: Continental Reifen Deutschland GmbH, 30165 Hannover (DE)
(72) Erfinder: SEEVERS, Jörn, 31303 Burgdorf (DE); WINKLER, Jens, 30173 Hannover (DE); MAURUSCHAT, Rainer, 30826 Garbsen (DE)
(74) Vertreter: Finger, Karsten
(86) Internationale Anmeldenummer: PCT/EP2006/001085
(87) Internationale Veröffentlichungsnummer: WO 2006/114144

(56) Entgegenhaltungen:
- EP-A- 0 319 588
- EP-A- 1 022 119
- EP-A- 1 184 204
- US-A- 5 221 406
- US-A- 5 252 156

## Beschreibung

Die Erfindung betrifft ein Verfahren zur Herstellung eines Fahrzeugluftreifens mit einer über den Umfang des Fahrzeugluftreifens erstreckten Karkasse, mit einem radial außerhalb der Karkasse über den gesamten Umfang des Fahrzeugluftreifens und in axialer Richtung wenigstens über die Aufstandsbreite des Fahrzeugluftreifens erstreckten Gürtel aus einer oder mehreren Gürtellagen mit jeweils schräg zur Umfangsrichtung des Reifens ausgebildeten parallelen in Kautschuk- oder Gummimaterial eingebetteten Festigkeitsträgern und mit einer radial außerhalb einer Gürtellage des Gürtels über den Umfang des Fahrezugluftreifens erstreckten Bandage, wobei auf die auf einem drehbaren rotationssymmetrischen Aufbaukörper aufgebaute - insbesondere radial äußere - Gürtellage des Gürtels zur Herstellung der Bandage ein oder mehrere parallele Festigkeitsträger im wesentlichen in Umfangsrichtung ausgerichtet in axialer Richtung des Aufbaukörpers schrauben- oder wendelförmig um die auf dem Aufbaukörper aufgebaute - insbesondere radial äußere - Gürtellage gespult werden.

Ein derartiges Verfahren ist beispielsweise aus der EP0712739 A1 und aus der US-A-5252156 bekannt.

Es ist bekannt, zur Begrenzung unerwünschter radialer Formveränderungen des Gürtels aufgrund hoher auf den Gürtel einwirkender Zentrifugalkräfte um die radial äußere Gürtellage von Hochgeschwindigkeitsreifen eine Bandagelage aus einem kontinuierlich über die gesamte axiale Gürtelerstreckung wendelförmig gewickelten Gummistreifen mit darin in Längsrichtung des Gummistreifens eingebetteten Festigkeitsträgern auszubilden. Die hierdurch erzielte gleiche Steigungsrichtung des Verlaufs der Festigkeitsträger über den gesamten axialen Erstreckungsbereich des Gürtels des Reifens kann zu Rundlaufproblemen führen. Um diese zu reduzieren ist es beispielsweise aus der EP0712739A1 bekannt, die Bandage symmetrisch zur Äquatorebene des Reifens auszubilden, in dem ein erster Bandagestreifen von einem ersten Spulkopf von der einen Gürtelkante und ein zweiter Bandagestreifen von einem zweiten Spulkopf von der zweiten Gürtelkante aus zur Äquatorebene hin aufgewickelt wird. Die Spullcöpfe sind hierzu in ihrer Bewegung auf einer gemeinsamen Spindel derart mechanisch mit einander gekoppelt, dass der Spulvorgang gleichzeitig auf beiden Seiten der Äquatorebene spiegelbildlich zueinander erfolgt. Auch eine zweite Lage der Bandage wird in gleicher Weise dadurch erzeugt, dass die Bandagestreifen durch die beiden miteinander mechanisch gekoppelten Spulköpfe jeweils auf einer axialen Gürtelseite spiegelbildlich zum Bandagestreifen der anderen Gürtelseite wendelförmig aufgewickelt werden.

Soweit ein Teil der Bandage mit anderem Bandagematerial erfolgen soll, muss der entsprechende Spulkopf umgebaut werden, in dem das Material aus Spulkopf, Zuführungs- und Ausrichtungsbereichen entfernt und durch neues Material ersetzt wird. Die symmetrische Wicklung mit den beiden über die gemeinsame Spindel mechanisch gekoppelten Spulköpfe ermöglich für beide Spulköpfe lediglich einen jeweils vorgegebenen axialen Vorschub der Spulköpfe zueinander und somit ein festes vorgegebenes Verhältnis der Steigungen der von den beiden Spulköpfe jeweils gespulten Bandagebereiche und ein festes vorgegebenes Verhältnis der Wicklungsdichte. In manchen Fällen ist es wünschenswert, einzelne Bereiche der Bandage mit abweichender Streifenbreite von Bandagenmaterial und/oder mit einem abweichenden Bandagenmaterial auszubilden. Bei der Wahl einer abweichenden Streifenbreite muss zunächst während des Aufbauprozesses der entsprechende Spulkopf und dieMaterialzuführung zur sicheren Führung des neuen Streifenmaterial umgebaut werden. Damit die Streifen mit gleicher Belegungsdichte aufgelegt werden können, muss die Spindel während des Aufbauprozesses ausgetauscht werden. Da dieser Aufwand eine produktive Herstellung solcher Reifen - wenn überhaupt - nur mit sehr großem zusätzlichem Aufwand ermöglicht, wird üblicherweise die Konstuktion derartiger Reifen lediglich auf die mit den beiden Spulköpfen mit geringem Aufwand erzielbaren Anpassungen beschränkt.

Die symmetrische Aufwicklung durch die beiden mechanisch über eine gemeinsame Spindel gekoppelten Spulköpfe ermöglicht somit zwar eine Reduzierung von Rundlaufproblemen aber unter erheblichen Einschränkungen der Ausbildung der Bandage hinsichtlich der Anpassung an die individuellen Erfordernisse eines Reifens. Eine Ausbildung der Bandage entsprechend individueller an den Reifen gestellter Anforderungen sind trotz zusätzlichem Aufwand nur stark eingeschränkt möglich.

Aus der EP 0319588 A1 ist es bekannt, Bandagestreifen auf einen auf einem Aufbaukörper aufgebauten Gürtel aufzuspulen, wobei der Bandagestreifen auf seinem Zuführweg zum Aufbaukörper über vier hintereinander angeordnete Umlenkrollen geführt wird.

Der Erfindung liegt daher die Aufgabe zugrunde, einen Fahrzeugluftreifen mit Gürtel und Bandage besser an die individuellen Erfordernisse eines Fahrzeugluftreifens anpassbar zu gestalten.

Die Aufgabe wird erfindungsgemäß durch das Verfahren zur Herstellung eines Fahrzeugluftreifens mit einer über den Umfang des Fahrzeugluftreifens erstreckten Karkasse, mit einem radial außerhalb der Karkasse über den gesamten Umfang des Fahrzeugluftreifens und in axialer Richtung wenigstens über die Aufstandsbreite des Fahrzeugluftreifens erstreckten Gürtel aus einer oder mehreren Gürtellagen mit jeweils schräg zur Umfangsrichtung des Reifens ausgebildeten parallelen in Kautschuk- oder Gummimaterial eingebetteten Festigkeitsträgern und mit einer radial außerhalb einer Gürtellage des Gürtels über den Umfang des Fahrzeugluftreifens erstreckten Bandage, wobei auf die auf einen drehbaren rotationssymmetrischen Aufbaukörper aufgebaute - insbesondere radial äußere - Gürtellage des Gürtels zur Herstellung der Bandage ein oder mehrere parallele Festigkeitsträger im wesentlichen in Umfangsrichtung ausgerichtet in axialer Richtung des Aufbaukörpers schrauben- oder wendelförmig um die auf dem Aufbaukörper aufgebaute - insbesondere radial äußere - Gürtellage gespult werden, gemäß den Merkmalen von Anspruch 1 gelöst, bei dem Bandagestreifenaufbaumaterial aus fadenförmigem Festigkeitsträger und/oder bandförmigem Streifen mit jeweils einem oder mehreren parallelen Festigkeitsträgern mit wenigstens vier hinsichtlich ihrer relativen Position zum Aufbaukörper gesteuert veränderbaren Spulköpfen zum Aufbaukörper geführt und durch gesteuertes Verdrehen des Aufbaukörpers und gesteuertes axiales Verändern der relativen Position zwischen Aufbaukörper und den Spulköpfen zum Aufspulen auf die -insbesondere radial äußere - Gürtellage des Gürtels um die - insbesondere radial äußere - Gürtellage herum schrauben- oder wendelförmig aufgespult werden. Dies ermöglicht sowohl ein hinsichtlich der Aufspulrichtung symmetrisches Aufspulen der Bandage als auch einen Einsatz unterschiedlicher Materialen der Festigkeitsträger, unterschiedliche Breiten der bandförmigen Streifen und Spulwinkel zur Umfangsrichtung für unterschiedliche Gürtelbereiche entsprechend der individuellen Erfordernisse des Reifens. Trotz Sicherstellung guter Rundlaufeigenschaften können sehr individuell einzelne Gürtelbereiche ohne besonderen Umrüstaufwand mit einer individuell abgestimmten Bandage und andere Gürtelbereiche mit anderer individuell abgestimmter Bandage ausgebildet werden. Abstimmungen auf speziell belastete Gürtelbereiche oder auf auf axial unterschiedlich verwendete Laufstreifenmaterialien sind hierdurch individuell möglich.

Vorteilhafte Weiterbildungen der Erfindung sind Gegenstand der abhängigen Ansprüche.

Die Erfindung wird im Folgenden an Hand der in den Fig. 1 bis 5 dargestellten Ausführungsbeispiele näher erläutert. Dabei zeigen
- Fig. 1: einen Fahrzeugluftreifen mit radialer Karkasse, Gürtel und Bandage in Querschnittsdarstellung,
- Fig. 2: Bandagestreifen in Schnittdarstellung,
- Fig. 3: Darstellung der wendelförmigen oder schraubenförmigen Wicklung eines Bandagecordes oder Bandagestreifens auf den Gürtel,
- Fig. 4: schematische Darstellung des Reifenaufbaus mit vier um eine Aufbautrommeltrommel angeordneten Spulköpfen zur Herstellung einer Gürtelbandage,
- Fig. 5a bis 5g: Schematische Darstellung eines Gürtels mit Spulbandage zur Erläuterung unterschiedlicher Spulbilder.

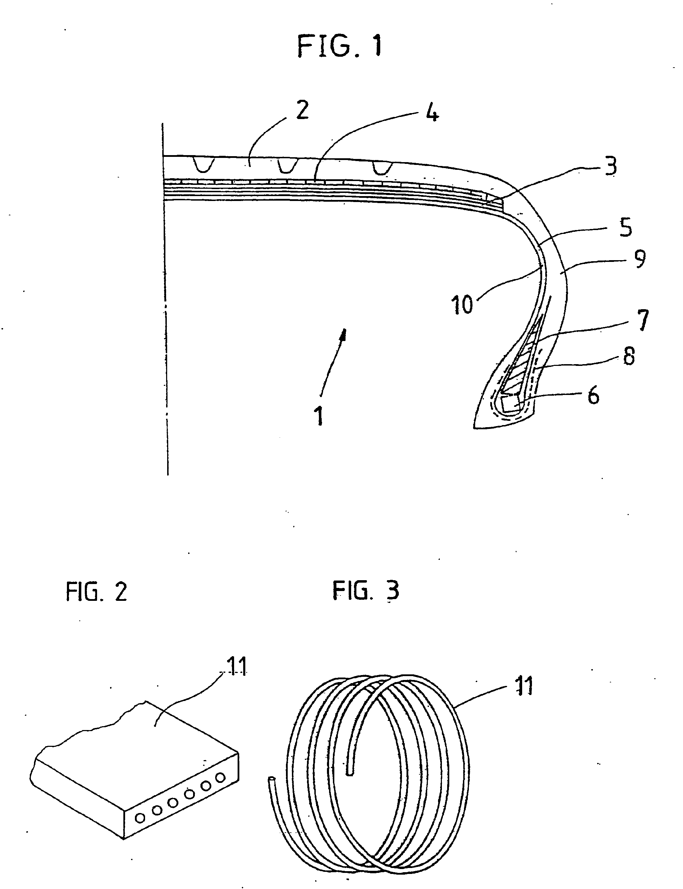

Der in Fig. 1 dargestellte Fahrzeugluftreifen setzt sich aus den üblichen Reifenbauteilen zusammen und umfasst daher einen profilierten Laufstreifen 2, einen Gürtel 3, eine Gürtelbandage 4, eine im vorliegenden Ausführungsbeispiel einlagig dargestellte Radialkarkasse 5, die um jeden Wulstkern 6 in herkömmlicher Weise gelegt ist, je ein Kernprofil 7 radial außerhalb des Wulstkernes 6, Wulstschutzstreifen 8, je eine Seitenwand 9 und eine luftdicht ausgeführte Innenschicht 10.

Im dargestellten Ausführungsbeispiel besteht der Gürtel 3 aus zwei Gürtellagen mit in jeder Lage parallel verlaufenden in Gummi eingebetteten Festigkeitsträgern, insbesondere aus Stahlcord, wobei sich die Festigkeitsträger in den beiden benachbarten Lagen kreuzen. Im Reifen sind die Gürtellagen derart angeordnet, dass die parallel zueinander verlaufenden Stahlcorde mit der Umfangsrichtung des Reifens einen spitzen Winkel in der Größenordnung von 15° bis 30°, insbesondere von 20° bis 25°, einschließen. Wie aus Fig. 1 in Verbindung mit den Figuren 2 und 3 hervorgeht, ist die Bandage 4 als sogenannte Spulbandage ausgeführt, bei der ein Bandagenstreifen 11, welcher aus in eine Gummimischung eingebetteten, in Längsrichtung des Streifens 11 verlaufenden, Festigkeitsträgern besteht, um den Gürtel 3 gewickelt bzw. gespult wird. Der Bandagenstreifen 11 kann beispielsweise ein Bandagestreifen 11 sein, bei dem, wie beispielsweise Fig. 2 zeigt, mehrere Fäden pro cm-Streifenbreite verwendet werden. Insbesondere ist eine Anordnung von 5 bis 12 Fäden pro cm-Streifenbreite, beispielsweise von 10 Fäden üblich. Der Bandagenstreifen 11 selbst hat üblicherweise eine Breite von 5 bis 15 mm, beispielsweise von 10 mm. Der Bandagestreifen 11 kann auch lediglich ein einzelner in Gummimaterial eingebetteter in Längsrichtung des Streifens ausgebildeter Festigkeitstträger sein,

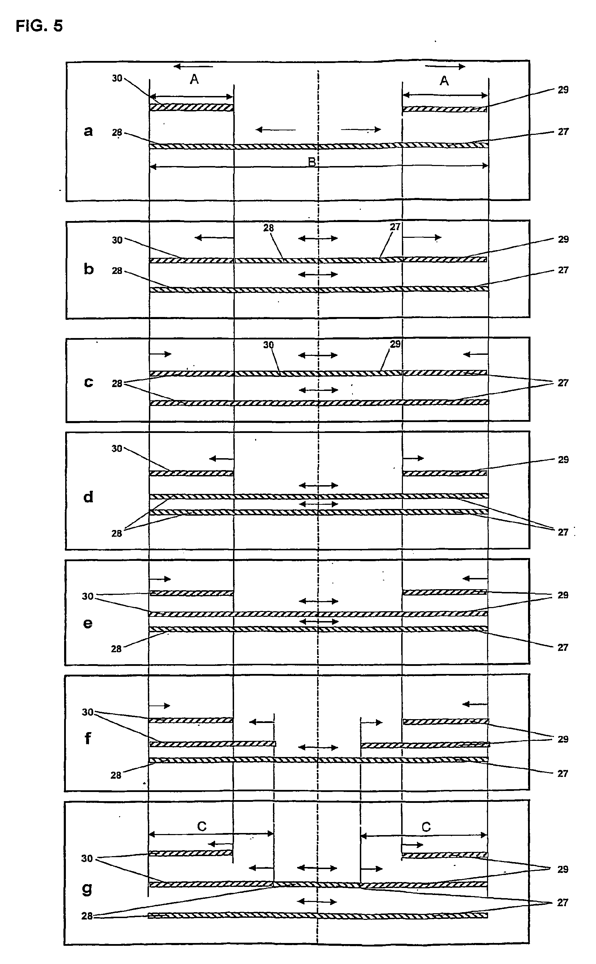

Fig. 3 zeigt schematisch die Art und Weise der wendelförmigen Wicklung eines solchen Bandagenstreifens 11 um die Reifenachse. Dabei ist der Bandagenstreifen 11 so um den Gürtel gewickelt, dass eine den Gürtel 3 insbesondere komplett abdeckende und Stoß an Stoß gewickelte Spulbandage 4 entsteht. Es können jedoch auch mehrere Lagen Spulbandage auf einen Reifen aufgebracht werden, insbesondere können an den Schulterbereichen abschnittsweise zusätzliche Bandagenlagen aufgebracht sein, die - wie in den Fig. 5a, Fig. 5d, Fig. 5e und Fig. 5g beispielhaft dargestellt - eine Breite A von zumindest 15% der Breite B des Gürtels 3 aufweisen und die Ränder des Gürtels 3 abdecken sollten.

Der Bandagenstreifen und der oder die im Bandagenstreifen 11 eingebetteten Festigkeitsträger schließen im fertig ausgebildeten, vulkanisierten Fahrzeugluftreifen in dessen Betriebszustand am Fahrzeug einen sehr kleinen Winkel mit der Umfangsrichtung des Reifens in der Größenordnung von 0° bis 5°, insbesondere von 1° bis 3°, ein.

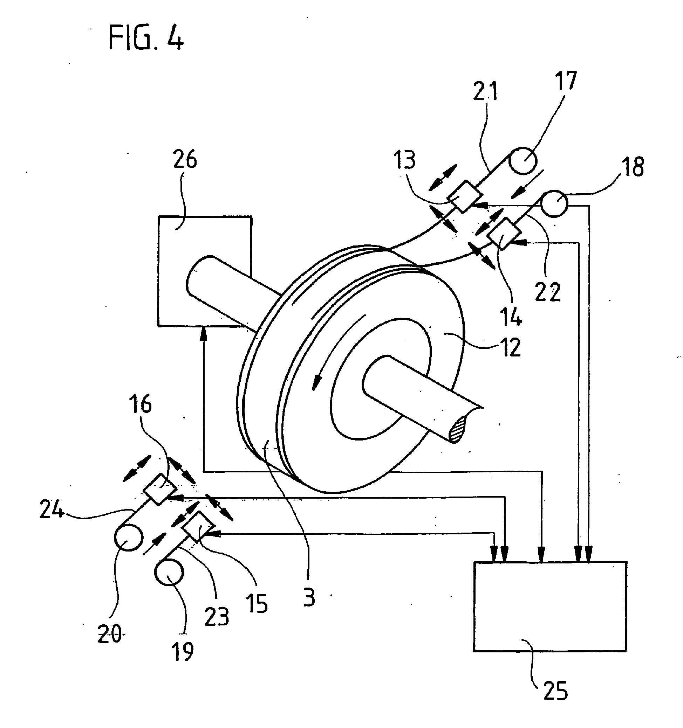

Fig. 4 zeigt eine in einem nicht dargestellten Gestell drehbar um ihre Achse gelagerte Aufbautrommel 12, die über eine mit einer Steuereinheit 25 bekannter Art verbundenen Antriebseinheit 26 bekannter Art in bekannter Weise um ihre Achse gesteuert verdreht werden kann. Radial außerhalb der radial äußeren Manteloberfläche der Aufbautrommel 12 sind zum Aufbau des Bandagestreifens 11 in verschiedenen Umfangspositionen der Aufbautrommel vier Spulköpfe 13, 14, 15, 16 zum Auflegen von Bandagestreifenaufbaumaterial auf die radial äußere Mantelfläche der Aufbautrommel 12 angeordnet und jeweils in ihrer axialen Position über die gesamte Breite der Aufbautrommel axial verschiebbar und in ihrer radialen Position von einer zur Belegung der Manteloberfläche mit Bandagematerial ausgebildeten Arbeitsposition im Bereich der radial äußeren Manteloberfläche der Gürteltrommel 12 nach radial außen in eine von der radial äußeren Manteloberfläche der Gürteltrommel 12 weiter beabstandete Ruheposition und wiederum zurück aus der Ruheposition in die Arbeitsposition radial heranbewegbar - beispielsweise verschiebbar - gelagert. Die Spulköpfe 13, 14, 15, 16 sind jeweils mit der Steuereinheit 25 verbunden und werden über die Steuereinheit jeweils individuell und unabhängig voneinander zur Belegung des Gürtels aus ihrer Ruheposition in die Arbeitsposition heranbewegt, in der Arbeitsposition axial parallel zur Drehachse der Aufbautrommel entlang der Manteloberfläche über den jeweils zu belegenden axialen Erstreckungsbereich der Aufbautrommel hinweg bewegt, wobei die axiale Bewegungsgeschwindigkeit in Abhängigkeit von der Drehgeschwindigkeit der Aufbautrommel und der gewünschten Wicklungssteigung des Bandagestreifens 11 zur Umfangsrichtung des Gürtels über die Steuereinheit gesteuert wird, und nach Beenden des Spulvorganges wieder aus ihrer Arbeitsposition an der Manteloberfläche der Aufbautrommel radial nach außen in die Ruhepositon gesteuert bewegt.

Jedem Spulkopf 13, 14, 15, 16 ist zur Zufuhr von Bandagestreifenaufbaumaterial eine Materialquelle, beispielsweise eine Speicherrolle 17 bzw. 18 bzw. 19 bzw. 20 bekannter Art zugeordnet, die in bekannter Weise in einem Gehäuse drehbar gelagert ist. So sind beispielsweise auf den Speichertrommeln 17, 18, 19, 20 bandförmige oder cordförmige Bandagenstreifenaufbaumaterialien 21, 22, 23, 24 gespeichert. Das Bandagenstreifenaufbaumaterial 21 der Speichertrommel 17 wird vom Spulkopf 13 aufgelegt. Das Bandagestreifenaufbaumaterial 22 der Speichertrommel 18 wird vom Spulkopf 14 aufgelegt. Das Bandagestreifenaufbaumaterial 23 der Speichertrommel 19 wird von Spulkopf 15 und das Bandagestreifenaufbaumaterial 24 der Speicherrolle 20 wird vom Spulkopf 16 aufgelegt. Die Bandagestreifenaufbaumaterialen 21, 22, 23 und 24 sind in einer Ausführung jeweils gleich ausgebildet. In einer anderen Ausführung sind die Bandagestreifenaufbaumaterialien 21, 22 und 23 jeweils gleich ausgebildet. Das Bandagenaufbaumaterial 24 ist anders ausgebildet. In einer weiteren Ausführung sind die Bandagenstreifenaufbaumaterialen 21 und 22 jeweils gleich ausgebildet und die Bandagenstreifenaufbaumaterialien 23 und 24 sind ebenfalls gleich, aber anders als die Bandagenstreifenaufbaumaterialien 21 und 22 ausgebildet. In einer anderen Ausführung sind die Bandagenstreifenaufbaumaterialien 21 und 22 jeweils gleich ausgebildet und die Bandagenstreifenaufbaumaterialien 23 und 24 sind jeweils von einander unterschiedlich und auch unterschiedlich zu den Bandagenstreifenaubaumaterialien 21 und 22 ausgebildet. In einer weiteren Ausführung sind alle vier Bandagenstreifenaufbaumaterialien 21, 22, 23 und 24 unterschiedlich ausgebildet.

Die Unterschiede zwischen den Bandagestreifenaufbaumaterialien liegen in einer ersten Ausführung in der Wahl des E-moduls und/oder in der Verwendung unterschiedlicher Materialien der Festigkeitsträger. Mögliche Materialien der Festigkeitsträger sind Monofilamente und Korde aus Nylon - insbesondere Nylon 6.6 -, Rayon, Polyester, Stahl oder Hybridcorde - beispielsweise aus Aramid und Nylon - insbesondere Nylon 6.6 -oder aus Stahl und Nylon - insbesondere Nylon 6.6 - sowie alle sonstigen zum Einsatz als Bandagematerial bekannten Materialien. So legt beispielsweise ein Teil der Spulköpfe 13, 14, 15 und 16 Bandagenstreifenaufbaumaterial mit im Bandagenstreifenaufbaumaterial eingebetteten wärmeschrumpffähigen textilen Festigkeitsträgern - beispielsweise aus Nylon 6.6 - auf und ein anderer Teil der Spulköpfe 13, 14, 15 und 16 Bandagenstreifenaufbaumaterial mit Hybridmaterial aus Nylon 6.6 und Aramid bekannter Art als im Bandagenstreifenaufbaumaterial eingebetteten Festigkeitsträgern auf. In einer anderen Ausführung legt ein Teil der Spulköpfe 13, 14, 15 und 16 Bandagenstreifenaufbaumaterial mit Polyester als im Bandagenstreifenaufbaumaterial eingebetteten Festigkeitsträger auf und ein anderer Teil der Spulköpfe 13,14,15 und 16 Bandagenstreifenaufbaumaterial mit Hybridmaterial aus Nylon 6.6 und Aramid bekannter Art als im Bandagenstreifenaufbaumaterial eingebetteten Festigkeitsträgern auf. In einer anderen Ausführung legt ein Teil der Spulköpfe 13, 14, 15 und 16 Bandagenstreifenaufbaumaterial mit Nylon 6.6 als im Bandagenaufbaumaterial eingebetteten Festigkeitsträger auf und ein anderer Teil der Spulköpfe 13, 14, 15 und 16 Bandagenstreifenaufbaumaterial mit Stahlcorden als im Bandagenstreifenaufbaumaterial eingebetteten Festigkeitsträgern auf.

Die Unterschiede des geförderten Bandagenstreifenaufbaumaterials liegen in anderer Ausführung in der Breite des geförderten Bandagestreifenaufbaumaterials. So legt in einer Ausführung ein Teil der Spulköpfe 13, 14, 15 und 16 Bandagestreifenaufbaumaterial aus reinen gummierten Einzelcorden auf und ein anderer Teil der Spulköpfe 13, 14, 15 und 16 Kautschukbänder mit mehreren parallelen in Kautschukmaterial eingebetteten Festigkeitsträgern auf. In einer anderen Ausführung legt ein Teil der Spulköpfe 13 ,14 ,15 und 16 schmale Kautschukbänder mit mehreren, beispielsweise drei parallelen Festigkeitsträgern auf und ein anderer Teil der Spulköpfe 13, 14, 15 und 16 breitere Kautschukbänder mit beispielsweise fünf, acht oder zehn parallelen Festigkeitsträgern auf.

Die Unterschiede des geförderten Bandagenstreifenaufbaumaterials liegen in anderer Ausführung in der gewählten Zugspannung, das aufgespulte Bandagestreifenmaterial aufweist. Diese werden beispielsweise dadurch erzielt, dass das Bandagestreifenaufbaumaterial mit unterschiedlicher Zugspannung aufgelegt wird. So legt in einer Ausführung ein Teil der Spulköpfe 13, 14, 15 und 16 Bandagestreifenaufbaumaterial mit einer ersten konstanten geringeren Zugspannung auf und ein anderer Teil der Spulköpfe 13, 14, 15 und 16 Bandagestreifenaufbaumaterial mit einer zweiten konstanten höheren Zugspannung auf In einer anderen Ausführung legt ein Teil der Spulköpfe 13, 14, 15 und 16 Bandagestreifenaufbaumaterial mit einem ersten über die axiale Erstreckung des Aufspulbereichs veränderten vorgegebenen Zugspannungsverlauf auf und ein anderer Teil der Spulköpfe 13, 14, 15 und 16 legt Bandagestreifenaufbaumaterial mit einem zweiten über die axiale Erstreckung des Aufspulbereichs veränderten vorgegebenen Zugspannungsverlauf auf. Die Zugspannung wird dabei in bekannter Weise über einen bekannten mit dem jeweiligen Spulkopf zusammenwirkenden Kraftregelungsmechanismus von der Steuereinheit 25 aus gesteuert oder geregelt.

In einer weiteren Ausführung legen die Spulköpfe 13, 14, 15 und 16 Bandagenaufbaumaterial auf, das sich sowohl im Material der Festigkeitsträger als auch in der Streifenbreites des Bandagenaufbaumaterials unterscheidet. In einer weiteren Ausführung legen die Spulköpfe 13, 14, 15 und 16 Bandagenaufbaumaterial auf, das sich sowohl im Material der Festigkeitsträger als auch in der Zugspannung des Bandagenaufbaumaterials unterscheidet. In einer weiteren Ausführung legen die Spulköpfe 13, 14, 15 und 16 Bandagenaufbaumaterial auf, das sich sowohl in der Zugspannung des Bandagenstreifenaufbaubaterials als auch in der Streifenbreites des Bandagenaufbaumaterials unterscheidet. In einer weiteren Ausführung legen die Spulköpfe 13, 14, 15 und 16 Bandagenaufbaumaterial auf, das sich sowohl im Material der Festigkeitsträger als auch in der Streifenbreites des Bandagenaufbaumaterials und zusätzlich in der Zugspannung des Bandagenstreifenaufbaubaterials unterscheidet.

Der Aufbau des Bandagestreifens 11 erfolgt dadurch, dass auf den auf der Aufbautrommel 12 in bekannter Weise aufgebauten und über den Umfang der Aufbautrommel erstreckten Gürtel 3 in Abhängigkeit von den für den zu fertigenden Reifen gewünschten Spulbildern und unterschiedlich zu bandagierenden Bandagebereichen bei rotierend angetriebener Aufbautrommel 12 die Spulköpfe 13, 14, 15, 16 zunächst jeweils gesteuert in ihre Arbeitsposition an der radial äußeren Mantelfläche der Aufbautrommel heranbewegt werden und das jeweils aufzulegende Bandagenaufbaumaterial 21, 22, 23, 24 jeweils in bekannter Weise ausgehend von den Speicherrollen 17, 18, 19 bzw. 20 von den Spulköpfen 13, 14, 15 bzw. 16 geführt auf die radial äußere Oberfläche des Gürtels 3 - beispielsweise von nicht dargestellten an den Spulköpfen jeweils drehbar gelagerten Auflegerollen bekannter Art - aufgelegt und durch die gesteuerte parallel zur Trommelachse erfolgte Bewegung des jeweiligen Spulkopfes 13, 14, 15 bzw.16 das jeweils vom Spulkopf 13, 14, 15 bzw.16 aufzulegende Bandagenstreifenmaterial 21 bzw. 22 bzw. 23 bzw. 24 mit der jeweils gewünschten Windungssteigung zur Umfangsrichtung des Gürtels aufgelegt wird. Durch die Rotationsbewegung der Aufbautrommel in Verbindung mit der parallel zur Trommelachse erfolgenden Verschiebebewegung des jeweiligen Spulkopfes erfolgt das wendel- oder schraubenförmige Aufwickeln, das auch als Aufspulen bezeichnet wird. Sobald der von einem Spulkopf 13, 14, 15 bzw. 16 zu belegende Gürtelabschnitt mit Bandagenmaterial belegt ist, wird in bekannter Weise das Bandagenmaterial abgeschnitten und der Spulkopf 13, 14, 15 bzw. 16 gesteuert aus seiner Arbeitsposition an der Aufbautrommel in seine hiervon beabstandete Ruheposition zurück bewegt.

In den Figuren 5a bis 5g sind mehrere unterschiedliche mit einer solchen Vorrichtung erzielbare Ausführungsbeispiele von Spulbildern in einer Querschnittsdarstellung, die die Achse der Aufbautrommel beinhaltet, beispielhaft dargestellt. Die Pfeildarstellungen geben dabei jeweils die axiale Verschieberichtung eines Spulkopfes und somit die Spulrichtung während des Spulens gegenüber der Aufbautrommel wieder.

Die Figuren 5a bis 5g zeigen dabei jeweils Spulbilder mit verschiedenen Spulbereichen 27, 28, 29 und 30, wobei der Spulbereich 27 jeweils vom Spulkopf 14 mit Bandagenaufbaumaterial 21, der Spulbereich 28 vom Spulkopf 13 mit Bandagenaufbaumaterial 22, der Spulbereich 29 vom Spulkopf 15 mit Bandagenaufbaumaterial 23 und der Spulbereich 30 vom Spulkopf 16 mit Bandagenaufbaumaterial 24 belegt werden. In den Fig. 5a bis 5g ist beispielhaft jeweils ein zur axialen Mitte der Gürtelbreite symmetrisches Spulbild dargestellt, bei dem die auf der einen axialen Seite der Mitte der Gürtelbreite gewählte Spulrichtung jeweils symmetrisch zur Spulrichtung der anderen axialen Seite gewählt ist.

Fig. 5a zeigt ein erstes Spulbild mit vier verschiedenen Spulbereichen 27, 28, 29 und 30, wobei der Spulbereich 27 vom Spulkopf 14 mit Bandagenaufbaumaterial 21, der Spulbereich 28 vom Spulkopf 13 mit Bandagenaufbaumaterial 22, der Spulbereich 29 vom Spulkopf 15 mit Bandagenaufbaumaterial 23 und der Spulbereich 30 vom Spulkopf 16 mit Bandagenaufbaumaterial 24 belegt werden. Die Spulköpfe 13 und 14 belegen dabei Spulbereiche 27,28 einer radial inneren, ersten Bandagelage jeweils mit axialer Verschieberichtung und somit Spulrichtung während des Spulens von der Mitte der axialen Erstreckungsbreite B des Gürtels 3 nach axial außen zur Gürtelkante hin. Die Spulköpfe 15 und 16 bilden mit ihren Spulbereichen 29 und 30 ebenfalls von axial innen nach axial außen hin gespult lediglich die Gürtelkanten überdeckende Randstreifen radial äußeren zweiten Bandagelage mit einer axialen Erstreckungsbreite A der Randstreifen, wobei Die Erstreckungsbreite so gewählt ist, dass A ≤ (B/2).

In Fig. 5b belegen die Spulköpfe 13 und 14 den Gürtel 3 mit einer auf die erste von ihnen gebildete radial innere, erste Bandagelage zusätzlichen radial äußeren zweiten Bandagenlage, die sich lediglich im axialen Mittenbereich zwischen den beiden durch die Spulköpfe 15 und 16 gebildeten Gürtelabdeckkantenbereiche 29 und 30 erstrecken. Auch in dieser Ausführung spulen alle vier Spulköpfe 13, 14, 15, 16 jeweils von axial innen nach axial außen in Richtung Gürtelkante.

In der Ausführung von Fig. 5c belegen die beiden Spulköpfe 13 und 14 nach Bespulen einer ersten radial inneren Lage unter Axialverschiebung der Spulköpfe 13 bzw. 14 jeweils von der Mitte nach axial außen zur Gürtelkante hin noch eine zweite, auf diese erste Lage ausgebildete radial äußere Lage in den beiden axial äußeren Bereichen des Gürtels 3 zur Abdeckung der Gürtelkanten, wobei hierzu die beiden Spulköpfe 13 und 14 von axial außen nach axial innen hin verschoben werden. Der zwischen den beiden durch die Spulköpfe 13 und 14 bespulten Bereiche 27 und 28 der zweiten Lage befindliche axialen Erstreckungsbereich wird von den Spulköpfen 15 und 16 über die Spulbereiche 29 und 30 unter axialer Verschiebung der Spulköpfe von axial innen in Richtung Gürtelkanten hin bespult.

Das Spulbild von Fig. 5d entspricht weitgehend dem Spulbild von Fig. 5a, jedoch wird nach Bespulen einer ersten Lage durch die Spulköpfe 13 und 14 noch eine zweite Lage in gleicher Weise durch diese beiden Spulköpfe 13 und 14 bespult. Erst auf die zweite Lage wird von den Spulköpfen 15 und 16 in einer dritten Lage der Gürtelkantenabdeckstreifen über einen axialen Erstreckungsbereich A zur Verstärkung des Gürtelkantenbereiches aufgespult.

In Fig. 5e ist eine Ausführung eines Spulbildes dargelegt, bei der die erste Lage wie in der Ausführung von Fig. 5a durch die Spulköpfe 13 und 14 ausgebildet wird und bei der auf diese erste Lage mit den Spulköpfen 15 und 16 eine zweite Lage, die sich jeweils ebenfalls ausgehend von der axialen Gürtelinitte nach axial außen zum Gürtelkantenrand hindurch erstreckt, aufgespult wird, wobei die Spulltöpfe 15 und 16 im Anschluss daran im Gürtelkantenbereich auf diese zweite Lage in einer dritten Lage einen weiteren Abdeckstreifen über einen axialen Erstreckungsbereich A jeweils von axial außen in Richtung axial innen erstreckt aufspulen.

In Fig. 5f ist ein Spulbild dargestellt, dass wie in der Ausführung von Fig. 5e erzeugt wird, wobei die Spulköpfe 15 und 16 die zweite Lage nicht ausgehend von der axialen Mitte der axialen Gürtelbreite B, sondern ausgehend von einem axialen Abstand zur axialen Mitte der Gürtelbreite B beginnen nach axial außen bis zum jeweiligen Gürtelkantenrand hin über einen axialen Erstreckungsbereich C zu spulen, wobei A<C<(B/2) gewählt ist. Auf diese Weise wird ein über die axiale Gürtelbreite B hin fein abgestuftes Versteifungsbild erzeugt.

Fig. 5 g zeigt ein Spulbild ähnlich dem Spulbild von Fig. 5f, wobei jedoch der in der zweiten Lage zwischen den durch die Spulköpfe 15 und 16 belegten Spulbereichen 29 und 30 verbleibende axiale Mittenbereich von den Spulköpfen 13 und 14 ausgehend von der axialen Mitte der Gürtelbreite B nach axial außen hin bis zu den Spulbereichen 29, 30 bespult wird.

Die dritte Lage kann dabei in gleicher Weise wie die dritte Lage der Fig. 5b von axial außen nach axial innen oder - wie in Fig. 5g dargestellt - alternativ hierzu von axial innen nach axial außen zu den Gürtelkanten hin bespult werden.

In einer weiteren - nicht dargestellten - Ausführung sind weitere zusätzliche Spulköpfe - beispielsweise weitere zwei Spulköpfe - in gleicher Weise gesteuert bewegbar und mit Gürtelbandagestreifenmaterial bestückbar, wie oben im Zusammenhang mit den Spulköpfen 15, 16, 17 und 18 dargelegt, im Bereich der Aufbautrommel angeordnet. Auf diese Weise kann beispielsweise das Spulbild von Fig. 5g derart erzeugt werden, dass die dritte Lage des Bandagestreifens durch die weiteren beiden Spulköpfe aufgelegt wird. In diesem Fall würden beispielsweise die Spulköpfe 13, 14 ein erstes Bandagenstreifenmaterial mit großer Streifenbreite von 10 mm mit 10 ins Kautschukmaterial eingebetteten parallelen Festigkeitsträgern, die Spulköpfe 15, 16 ein zweites Streifenaufbaumaterial mit kleinerer Streifenbreite von beispielsweise 5 mm und lediglich mit fünf ins Kautschukmaterial eingebetteten paralleln Festigkeitsträgern und die beiden zusätzlichen Spulköpfe ein drittes Streifenaufbaumaterial, beispielsweise aus gummiertem Einzeldraht auflegen.

Ebenso ist es denkbar, bei Bedarf Bandagenaufbaumaterial auf einen Gürtel mit acht oder zwölf Spulköpfen aufzuspulen.

Die Aubautrommel ist in Fig. 4 als Aufbautrommel mit zylindrischer Mantelfläche dargestellt. Ebenso ist es möglich die Aufbautrommel mit einer konturierten Mantelfläche auszubilden. So ist es beispielsweise möglich die Aufbautrommel mit an ihrer radial äußeren Mantelfläche in ihrem durch die Trommelachse ausgebildetem Querschnitt mit balliger, konvexer oder bei Bedarf auch mit konkaver radialer Außenkontur auszubilden. Ebenso ist es möglich, anstelle der Aufbautrommel einen torusförmigen Aufbaukörper bekannter Art zum Aufbau des Gürtels und der Bandage einzusetzen.

### Bezugszeichenliste

### (Teil der Beschreibung)

- 1: Fahrzeugluftreifen
- 2: Laufstreifen
- 3: Gürtel
- 4: Gürtelbandage
- 5: Radialkarkasse
- 6: Wulstkern
- 7: Kernprofil
- 8: Wulstschutzstreifen
- 9: Seitenwand
- 10: Innenschicht
- 11: Bandagenstreifen
- 12: Aufbautrommel
- 13: Spulkopf
- 14: Spulkopf
- 15: Spulkopf
- 16: Spulkopf
- 17: Speicherrolle
- 18: Speicherrolle
- 19: Speicherrolle
- 20: Speicherrolle
- 21: Bandagematerial
- 22: Bandagematerial
- 23: Bandagematerial
- 24: Bandagematerial
- 25: Steuereinheit
- 26: Antrieb
- 27: Spulbereich
- 28: Spulbereich
- 29: Spulbereich
- 30: Spulbereich

## Patentansprüche

1. Verfahren zur Herstellung eines Fahrzeugluftreifens (1) mit einer über den Umfang des Fahrzeugluftreifens (1) erstreckten Karkasse (5), mit einem radial außerhalb der Karkasse (5) über den gesamten Umfang des Fahrzeugluftreifens (1) und in axialer Richtung wenigstens über die Aufstandsbreite des Fahrzeugluftreifens (1) erstreckten Gürtel (3) aus einer oder mehreren Gürtellagen mit jeweils schräg zur Umfangsrichtung des Reifens ausgebildeten parallelen in Kautschuk- oder Gummimaterial eingebetteten Festigkeitsträgern und mit einer radial außerhalb einer Gürtellage des Gürtels (3) über den Umfang des Fahrzeugluftreifens (1) erstreckten Bandage (4),
wobei auf die auf einem drehbaren rotationssymmetrischen Aufbaukörper aufgebaute - insbesondere radial äußere - Gürtellage des Gürtels (3) zur Herstellung der Bandage (4) ein oder mehrere parallele Festigkeitsträger im wesentlichen in Umfangsrichtung ausgerichtet in axialer Richtung des Aufbaukörpers (12) schrauben- oder wendelförmig um die auf dem Aufbaukörper (12) aufgebaute - insbesondere radial äußere - Gürtellage gespult werden,
**dadurch gekennzeichnet,**
**dass** Bandagestreifenaufbaumaterial (21,22,23,24) aus fadenförmigem Festigkeitsträger und/oder bandförmigem Streifen (11) mit jeweils einem oder mehreren parallelen Festigkeitsträgern mit wenigstens vier hinsichtlich ihrer relativen Position zum Aufbaukörper (12) gesteuert veränderbaren Spulköpfen (13,14,15,16) zum Aufbaukörper (12) geführt und durch gesteuertes Verdrehen des Aufbaukörpers (12) und gesteuertes axiales Verändern der relativen Position zwischen Aufbaukörper (12) und den Spulköpfen (13,14,15,16) zum Aufspulen auf die -insbesondere radial äußere - Gürtellage des Gürtels (3) um die - insbesondere radial äußere - Gürtellage herum schrauben- oder wendelförmig aufgespult werden.

2. Verfahren zur Herstellung eines Fahrzeugluftreifens gemäß den Merkmalen von Anspruch 1,
wobei das Bandagestreifenaufbaumaterial (21,22,23,24) auf einen auf eine Aufbautrommel (12) aufgebauten Gürtel (3) um den Gürtel (3) herum schrauben- oder wendelförmig aufgespult wird.

3. Verfahren zur Herstellung eines Fahrzeugluftreifens gemäß den Merkmalen von Anspruch 1 oder 2,
bei dem jedem Spulkopf (13,14,15,16) zumindest während des Spulens mit einer eigenen Materialspeichereinrichtung (17,18,19,20) verbunden ist, aus der der Spulkopf (13,14,15,16) mit Bandagestreifenaufbaumaterial (21,22,23,24) bestückt wird.

4. Verfahren zur Herstellung eines Fahrzeugluftreifens gemäß den Merkmalen von einem oder mehreren der vorangegangenen Ansprüche,
dass die wenigstens vier hinsichtlich ihrer relativen Position zum Aufbaukörper (12) gesteuert veränderbaren Spulköpfen (13,14,15,16) wenigstens zwei unterschiedliche Bandagestreifenaufbaumaterialen (21,22,23,24) aus fadenförmigen Festigkeitsträgern und/oder bandförmige Streifen (11) mit jeweils einem oder mehreren parallelen Festigkeitsträgern zuführen.

5. Verfahren zur Herstellung eines Fahrzeugluftreifens gemäß den Merkmalen von **Anspruch 4**,
dass die wenigstens vier hinsichtlich ihrer relativen Position zum Aufbaukörper gesteuert veränderbaren **Spulköpfen** (13,14,15,16) wenigstens zwei unterschiedliche Bandagestreifenaufbaumaterialen (21,22,23,24) aus fadenförmigen Festigkeitsträgern und/oder bandförmige Streifen (11) mit jeweils einem oder mehreren parallelen Festigkeitsträgern zuführen, wobei die Unterschiede im E-Modul der Festigkeitsträger liegen.

6. Verfahren zur Herstellung eines Fahrzeugluftreifens gemäß den Merkmalen von **Anspruch 4**,
dass die wenigstens vier hinsichtlich ihrer relativen Position zum Aufbaukörper (12) gesteuert veränderbaren **Spulköpfen** (13,14,15,16) wenigstens zwei unterschiedliche Bandagestreifenaufbaumaterialen (21,22,23,24) aus fadenförmigen Festigkeitsträgern und/oder bandförmige Streifen (11) mit jeweils einem oder mehreren parallelen Festigkeitsträgern zuführen, wobei die Unterschiede im gewählten Material der Festigkeitsträger liegen.

7. Verfahren zur Herstellung eines Fahrzeugluftreifens gemäß den Merkmalen von einem oder mehreren der **Ansprüche 4 bis 6,**
dass die wenigstens vier hinsichtlich ihrer relativen Position zum Aufbaukörper (12) gesteuert veränderbaren **Spulköpfen** (13,14,15,16) wenigstens zwei unterschiedliche Bandagestreifenaufbaumaterialen (21,22,23,24) aus fadenförmigen Festigkeitsträgern und/oder bandförmige Streifen (11) mit jeweils einem oder mehreren parallelen Festigkeitsträgern zuführen, wobei die Unterschiede in der Breite der Bandagenstreifenaufbaumaterialien (21,22,23,24) liegen.

8. Verfahren zur Herstellung eines Fahrzeugluftreifens gemäß den Merkmalen von einem oder mehreren der **Ansprüche 4 bis 6,**
dass die wenigstens vier hinsichtlich ihrer relativen Position zum Aufbaukörper (12) gesteuert veränderbaren **Spulköpfen** (13,14,15,16) wenigstens zwei unterschiedliche Bandagestreifenaufbaumaterialen (21,22,23,24) aus fadenförmigen Festigkeitsträgern und/oder bandförmige Streifen (11) mit jeweils einem oder mehreren parallelen Festigkeitsträgern zuführen, wobei die Unterschiede in der Zugspannung der Bandagenstreifenaufbaumaterialien (21,22,23,24), unter der diese aufgewicklet werden, liegen.

## Claims

1. Method for producing a pneumatic vehicle tire (1), with a casing (5) which extends over the circumference of the pneumatic vehicle tire (1), with a belt (3) which extends radially outside the casing (5) over the entire circumference of the pneumatic vehicle tire (1) and in the axial direction at least over the tread contact width of the pneumatic vehicle tire (1), said belt comprising one or more belt plies with reinforcing elements in each case formed obliquely in relation to the circumferential direction of the tire and embedded in parallel in unvulcanized or vulcanized rubber, and with a bandage (4) which extends radially outside a belt ply of the belt (3) over the circumference of the pneumatic vehicle tire (1), wherein, on the belt ply - in particular the radially outer belt ply - of the belt (3) built up on a rotatable rotationally symmetrical building body, one or more parallel reinforcing elements, aligned substantially in the circumferential direction, is or are wound helically or spirally in the axial direction of the building body (12) around the belt ply - in particular the radially outer belt ply - built up on the building body (12) to produce the bandage (4), **characterized in that** bandage strip building material (21, 22, 23, 24) comprising reinforcing elements in filament form and/or strips (11) in band form with in each case one or more parallel reinforcing elements are guided to the building body (12) by at least four winding heads (13, 14, 15, 16), which can be changed in a controlled manner with regard to their relative position in relation to the building body (12), and are helically or spirally wound onto the belt ply - in particular the radially outer belt ply - of the belt (3), around the belt ply - in particular the radially outer belt ply - by controlled turning of the building body (12) and controlled axial changing of the relative position between the building body (12) and the winding heads (13, 14, 15, 16) for the winding operation.

2. Method for producing a pneumatic vehicle tire according to the features of Claim 1, the bandage strip building material (21, 22, 23, 24) being wound helically or spirally onto a belt (3) built up on a building drum (12), around the belt (3).

3. Method for producing a pneumatic vehicle tire according to the features of Claim 1 or 2, in which each winding head (13, 14, 15, 16) is connected, at least during the winding, to its own material storage device (17, 18, 19, 20), from which the winding head (13, 14, 15, 16) is provided with bandage strip building material (21, 22, 23, 24).

4. Method for producing a pneumatic vehicle tire according to the features of one or more of the preceding claims, that the at least four winding heads (13, 14, 15, 16), which can be changed in a controlled manner with regard to their relative position in relation to the building body (12), feed at least two different bandage strip building materials (21, 22, 23, 24) comprising reinforcing elements in filament form and/or strips (11) in band form with in each case one or more parallel reinforcing elements.

5. Method for producing a pneumatic vehicle tire according to the features of Claim 4, that the at least four winding heads (13, 14, 15, 16), which can be changed in a controlled manner with regard to their relative position in relation to the building body, feed at least two different bandage strip building materials (21, 22, 23, 24) comprising reinforcing elements in filament form and/or strip (11) in band form with in each case one or more parallel reinforcing elements, the differences lying in the modulus of elasticity of the reinforcing elements.

6. Method for producing a pneumatic vehicle tire according to the features of Claim 4, that the at least four winding heads (13, 14, 15, 16), which can be changed in a controlled manner with regard to their relative position in relation to the building body (12), feed at least two different bandage strip building materials (21, 22, 23, 24) comprising reinforcing elements in filament form and/or strips (11) in band form with in each case one or more parallel reinforcing elements, the differences lying in the chosen material of the reinforcing elements.

7. Method for producing a pneumatic vehicle tire according to the features of one or more of Claims 4 to 6, that the at least four winding heads (13, 14, 15, 16), which can be changed in a controlled manner with regard to their relative position in relation to the building body (12), feed at least two different bandage strip building materials (21, 22, 23, 24) comprising reinforcing elements in filament form and/or strips (11) in band form with in each case one or more parallel reinforcing elements, the differences lying in the width of the bandage strip building materials (21, 22, 23, 24).

8. Method for producing a pneumatic vehicle tire according to the features of one or more of Claims 4 to 6, that the at least four winding heads (13, 14, 15, 16), which can be changed in a controlled manner with regard to their relative position in relation to the building body (12), feed at least two different bandage strip building materials (21, 22, 23, 24) comprising reinforcing elements in filament form and/or strips (11) in band form with in each case one or more parallel reinforcing elements, the differences lying in the tensile stress of the bandage strip building materials (21, 22, 23, 24) under which they are wound on.

## Revendications

1. Procédé de fabrication d'un bandage pneumatique (1) pour roue de véhicule présentant
une carcasse (5) qui s'étend sur la périphérie du bandage pneumatique (1) pour roue de véhicule,
une ceinture (3) constituée d'une ou de plusieurs couches de ceinture dotées de renforts incorporés dans le matériau de caoutchouc, parallèles et obliques par rapport la direction périphérique du bandage pour roue,
la ceinture s'étendant radialement à l'éxtérieur de la carcasse (5) sur toute la périphérie de bandage pneumatique (1) pour roue de véhicule et, dans la direction axiale, au moins sur la largeur d'appui au sol du bandage pneumatique (1) pour roue de véhicule,
et une bande (4) de bandage qui s'étend radialement à l'extérieur d'une couche de la ceinture (3) sur toute la périphérie du bandage pneumatique (1) pour roue de véhicule,
tandis que sur la couche de ceinture (3), en particulier la couche radialement extérieure, montée sur le corps de montage rotatif et présentant une symétrie de rotation, pour la fabrication de la couche du bandage (4), un ou plusieurs renforts parallèles orientés essentiellement dans la direction périphérique sont enroulés en hélice ou en spirale dans la direction axiale d'un corps de montage (12) autour de la couche de ceinture, en particulier la couche de ceinture radialement extérieure montée sur le corps de montage (12),
**caractérisé en ce que**
des matériaux (21, 22, 23, 24) de montage de rubans de bande de bandage, en renforts en forme de fils et/ou en rubans (11) en forme de bandes, qui présentent chacun un ou plusieurs renforts parallèles sont guidés par moins quatre têtes de bobinage (13, 14, 15, 16) dont la position par rapport au corps de montage (12) peut être modifiée de manière contrôlée vers le corps de montage (12) et, par rotation contrôlée du corps de montage (12) et modification axiale contrôlée de la position relative du corps de montage (12) et des têtes de bobinage (13, 14, 15, 16), sont enroulés en hélice ou en spirale autour de la couche de ceinture, en particulier de la couche radialement extérieure, pour être enroulés sur la couche de ceinture (3), en particulier sur la couche radialement extérieure.

2. Procédé de fabrication d'un bandage pneumatique pour roue de véhicule selon les caractéristiques de la revendication 1, dans lequel les matériaux (21, 22, 23, 24) de montage en rubans de bande de bandage sont enroulés en hélice ou en spirale autour de la ceinture (3) sur une ceinture (3) montée sur un tambour de montage (12).

3. Procédé de fabrication d'un bandage pneumatique pour roue de véhicule selon les caractéristiques des revendications 1 ou 2, dans lequel au moins pendant le bobinage, chaque tête de bobinage (13, 14, 15, 16) est raccordée à un dispositif propre (17, 18, 19, 20) d'alimentation en matériau depuis lequel la tête de bobinage (13, 14, 15, 16) est alimentée en matériau (21, 22, 23, 24) de montage de rubans de bande de bandage.

4. Procédé de fabrication d'un bandage pneumatique pour roue de véhicule selon les caractéristiques d'une ou plusieurs des revendications précédentes, **caractérisé en ce que** les quatre ou plusieurs têtes de bobinage (13, 14, 15, 16) dont la position par rapport au corps de montage (12) peut être modifiée de manière contrôlée amènent au moins deux matériaux (21, 22, 23, 24) différents de montage de rubans de bande de bandage constitués de renforts en forme de fils et/ou de rubans (11) en forme de bandes présentant chacun un ou plusieurs renforts parallèles.

5. Procédé de fabrication d'un bandage pneumatique pour roue de véhicule selon les caractéristiques de la revendication 4, **caractérisé en ce que** les quatre ou plusieurs têtes de bobinage (13, 14, 15, 16) dont la position par rapport au corps de montage (12) peut être modifiée de manière contrôlée amènent au moins deux matériaux (21, 22, 23, 24) différents de montage de rubans de bande de bandage constitués de renforts en forme de fils et/ou de rubans (11) en forme de bandes présentant chacun un ou plusieurs renforts parallèles, les différences résidant dans le module élastique des renforts.

6. Procédé de fabrication d'un bandage pneumatique pour roue de véhicule selon les caractéristiques de la revendication 4, **caractérisé en ce que** les quatre ou plusieurs têtes de bobinage (13, 14, 15, 16) dont la position par rapport au corps de montage (12) peut être modifiée de manière contrôlée amènent au moins deux matériaux (21, 22, 23, 24) différents de montage de rubans de bande de bandage constitués de renforts en forme de fils et/ou de rubans (11) en forme de bandes présentant chacun un ou plusieurs renforts parallèles, les différences résidant dans le matériau sélectionné pour les renforts.

7. Procédé de fabrication d'un bandage pneumatique pour roue de véhicule selon les caractéristiques des revendications 4 à 6, **caractérisé en ce que** les quatre ou plusieurs têtes de bobinage (13, 14, 15, 16) dont la position par rapport au corps de montage (12) peut être modifiée de manière contrôlée amènent au moins deux matériaux (21, 22, 23, 24) différents de montage de rubans de bande de bandage constitués de renforts en forme de fils et/ou de rubans (11) en forme de bandes présentant chacun un ou plusieurs renforts parallèles, les différences résidant dans la largeur des matériaux (21, 22, 23, 24) de montage de rubans de bande de bandage.

8. Procédé de fabrication d'un bandage pneumatique pour roue de véhicule selon les caractéristiques des revendications 4 à 6, **caractérisé en ce que** les quatre ou plusieurs têtes de bobinage (13, 14, 15, 16) dont la position par rapport au corps de montage (12) peut être modifiée de manière contrôlée amènent au moins deux matériaux (21, 22, 23, 24) différents de montage de rubans de bande de bandage constitués de renforts en forme de fils et/ou de rubans (11) en forme de bandes présentant chacun un ou plusieurs renforts parallèles, les différences résidant dans la contrainte de traction exercée sur les matériaux (21, 22, 23, 24) de montage de rubans de bande de bandage pendant qu'ils sont enroulés.
